# EUROPÄISCHE PATENTANMELDUNG

(11) **EP 2 930 808 A1**
(43) Veröffentlichungstag der Anmeldung: **14.10.2015**
(21) Anmeldenummer: 15151781.0
(22) Anmeldetag: 20.01.2015
(51) Int. Cl.: H02G 3/12

(54) **Elektrisches oder elektronisches Installationsgerät**

(30) Priorität: 18.03.2014 DE 102014103687
(71) Anmelder: Gira Giersiepen GmbH & Co. Kg, 42477 Radevormwald (DE)
(72) Erfinder: Walther, Nico, 52146 Würselen (DE); Heutz, Andreas, 52499 Baesweiler (DE); Lorry, Kerstin, 52066 Aachen (DE)
(74) Vertreter: Angerhausen, Christoph

(57) **Zusammenfassung**

Die Erfindung betrifft ein elektrisches oder elektronisches Installationsgerät, mit einer Energieversorgungseinheit (10); einem Referenzrahmen (14), der die Einbauposition des Installationsgerätes festlegt; einem Bedienaufsatz (20), der mit der Energieversorgungseinheit (10) zumindest elektrisch gekoppelt ist, wobei der Bedienaufsatz (20) eine Eingabeeinrichtung (22) für die Eingabe von Befehlen für die Steuerung der Raumqualität und zumindest eine Ausgabeeinrichtung (22) aufweist; der durch einen Aufnahmerahmen (30) gekennzeichnet ist, der in Bezug auf den Referenzrahmen (14) verlagerbar ist, um Dicken-oder Höhentoleranzen der Einbauposition auszugleichen, wobei der Bedienaufsatz (20) am Aufnahmerahmen (30) festgelegt ist und wobei die elektrische Kopplung des Bedienaufsatzes (20) zur Energieversorgungseinheit (10) unabhängig von der Position des Aufnahmerahmens (30) gewährleistet ist.

## Beschreibung

Die Erfindung betrifft ein elektrisches oder elektronisches Installationsgerät, mit einer Energieversorgungseinheit, einem Referenzrahmen, die die Einbauposition des Installationsgerätes festlegt, und einem Bedienaufsatz, der mit der Energieversorgungseinheit zumindest elektrisch gekoppelt ist, wobei der Bedienaufsatz eine Eingabeeinrichtung für die Eingabe von Befehlen für die Steuerung der Raumqualität und zumindest eine Ausgabeeinrichtung aufweist.

"Raumqualität" bedeutet dabei eine Anzahl von vom Menschen sensorisch wahrnehmbaren Parametern oder Signalen, wie Licht, Schall, Temperatur, Luftfeuchtigkeit, die einzeln oder in Kombination vom Installationsgerät, gegebenenfalls über angeschlossene Endgeräte, erfasst und beeinflusst werden können.

Ein derartiges Installationsgerät der Gebäudesystemtechnik ist aus der DE 10 2011 053 624 A1 bekannt. Die Bedienaufsätze solcher Installationsgeräte sind dabei mit einem Bildschirm ausgerüstet, der auch als "Touchscreen" ausgestaltet sein kann. Die zur Funktion notwendige Energieversorgungseinheit umfasst ein Netzteil sowie Anschlusskontaktteile, welche in einer Unterputzdose angeordnet sind, deren Auflagefläche auf der Wand einen Referenzrahmen festlegt. Regelmäßig wird ein Designrahmen verwendet, um eine formschöne Umfassung zu bilden. Das bekannte Installationsgerät bedient sich eines Kontaktelementes zwischen dem Designrahmen und dem Bedienaufsatz, um elektrostatische Aufladungen zuverlässig abzuleiten.

Die Energieversorgungseinheit besteht somit im Wesentlichen aus einem Netzteil, das in einer Unterputzdose untergebracht ist, wobei zusammenfassend auch von einem Unterputznetzteil die Rede sein soll. Bei der Gebäudenutzung, vor allem im privaten Bereich, wird über dem Unterputznetzteil oftmals eine Tapete angebracht, die ein nicht unbeträchtliches Dickenmaß in der Größenordnung von 2 mm haben kann. Zusammen mit der Referenzfläche der Unterputzdose, deren Dicke ungefähr 0.8 mm beträgt, ergibt sich, dass gegebenenfalls ein Toleranzausgleich erfolgen muss, der in der Größenordnung von bis zu 2.8 mm liegen muss.

Es ist daher die Aufgabe der Erfindung, den Aufbau eines elektrischen oder elektronischen Installationsgerätes so anzupassen, dass bei Nutzung eines Unterputznetzteils ein Tapetenausgleich realisiert werden kann.

Diese Aufgabe wird durch ein elektrisches oder elektronisches Installationsgerät mit den Merkmalen des Anspruchs 1 gelöst. Erfindungsgemäß ist dieses gekennzeichnet durch einen Aufnahmerahmen, der in Bezug auf den Referenzrahmen verlagerbar ist, um Dicken- oder Tiefentoleranzen der Einbauposition auszugleichen, wobei der Bedienaufsatz am Aufnahmerahmen festgelegt ist und wobei die elektrische Kopplung des Bedienaufsatzes zur Energieversorgungseinheit unabhängig von der Position des Aufnahmerahmens gewährleistet ist.

Vorteilhaft ist vorgesehen, dass der Referenzrahmen Bestandteil einer Unterputzdose ist, in der die Energieversorgungseinheit untergebracht ist.

Das Installationsgerät der vorliegenden Erfindung ist somit modular aufgebaut. Es können verschiedene Netzteile eingesetzt werden, wobei diese jeweils in eine übliche Unterputzdose mit einer Tiefe von 40 mm installiert werden können. Hierdurch wird es insbesondere möglich, das Installationsgerät ohne größeren Aufwand im Nachrüstfall in eine bestehende Unterputzdose zu installieren. Das Netzteil kann dabei in zwei um 90° verdrehten Ausrichtungen eingebaut werden, um sowohl eine vertikale als auch eine horizontale Ausrichtung des Bedienaufsatzes zu ermöglichen. Die Energieversorgungseinheit kann dabei ein Power-over-Ethernet-Netzteil, ein 230 V-Netzteil oder ein Weitbereichsnetzteil mit 10 - 35 V AC/DC, vorzugsweise 24 V, sein.

Für den Tapetenausgleich können im oder am Aufnahmerahmen Führungsmittel vorgesehen sein, die verlagerbar mit komplementären Führungsmitteln im oder am Referenzrahmen in Eingriff sind.

Nach einer Ausgestaltung der Erfindung können die Führungsmittel des Aufnahmerahmens Schrauben sein, und der Referenzrahmen kann entsprechende Gewindeöffnungen als komplementäre Führungsmittel aufweisen. Eine entsprechend mechanisch reversierte Ausgestaltung ist denkbar. Der Tapetenausgleich kann nun stattfinden, indem die Schrauben mehr oder weniger in die Öffnungen eingeführt werden. Der Aufnahmerahmen kann anschließend über zusätzliche Schrauben mit dem Unterputzeinsatz verschraubt werden, wenn dies erforderlich erscheint.

Der erfindungsgemäß vorgesehene Aufnahmerahmen übernimmt noch eine Anzahl weiterer Funktionen.

Beispielsweise kann vorgesehen sein, dass der Aufnahmerahmen einen Lautsprecher aufweist, der nach einer besonderen Ausgestaltung zur Akustikverbesserung als Rückraumvolumen einen abgedichteten Teil des Unterputzgehäuses nutzt. Die Rückseite des Lautsprechers taucht dabei in den Unterputzbauraum ein. Es kann vorgesehen sein, dass mehrere Dichtungen im Unterputznetzteil für eine möglichst gute akustische Trennung zwischen dem Rückraumvolumen und der Umgebung sorgen.

Weiter kann vorgesehen sein, dass die einander zugewandten Seiten von Bedienaufsatz und Aufnahmerahmen so gestaltet sind, dass ein Schallkanal für von dem Lautsprecher erzeugte Schallwelle zu deren zielgerichteter Ausgabe aus dem Installationsgerät gebildet wird.

Um den Bedienaufsatz am Aufnahmerahmen festzulegen, sind Rastelemente am Aufnahmerahmen vorgesehen, mit denen komplementäre Strukturen am Bedienaufsatz in Eingriff kommen.

Ferner kann vorgesehen sein, dass der Aufnahmerahmen einen Demontageschutz aufweist.

Der erfindungsgemäß erreichte variable Abstand bei der elektrischen Kontaktierung wird von einem Steckverbindersystem überbrückt. Daher ist nach einer Ausgestaltung der Erfindung vorgesehen, dass am Bedienaufsatz ein Pfostenstecker bereit gestellt ist, der eine entsprechende Buchse des Netzteils kontaktiert, um wenigstens die elektrische Kopplung von Bedienaufsatz und Netzteil herzustellen.

Schließlich kann ein Temperatursensor an den Bedienaufsatz und/oder an den Aufnahmerahmen gekoppelt sein, wobei der Temperatursensor die Temperatur außerhalb des Installationsgerätes erfasst.

Im Folgenden soll die Erfindung lediglich beispielhaft anhand der beigefügten Zeichnung näher erläutert werden. Es zeigt:
- Figur 1: eine Explosionsdarstellung einer Ausführungsform eines elektrischen oder elektronischen Installationsgerätes gemäß der vorliegenden Erfindung, aus der der modulare Aufbau besonders gut hervorgeht;
- Figur 2: eine Explosionsdarstellung der Energieversorgungseinheit am Beispiel eines Power-over-Ethernet-Netzteils
- Figur 3: eine Explosionsdarstellung ähnlich der der Figur 1, jedoch aus der rückseitigen Perspektive betrachtet;
- Figur 4: eine Seitenansicht eines elektrischen oder elektronischen Installationsgerätes gemäß der vorliegenden Erfindung; und
- Figur 5: ein montiertes elektrisches oder elektronisches Installationsgerät, das an bzw. in einer Wand angebracht ist, wobei im linken Teilbild die Situation ohne Tapete, im rechten Teilbild die Situation mit Tapete dargestellt ist.

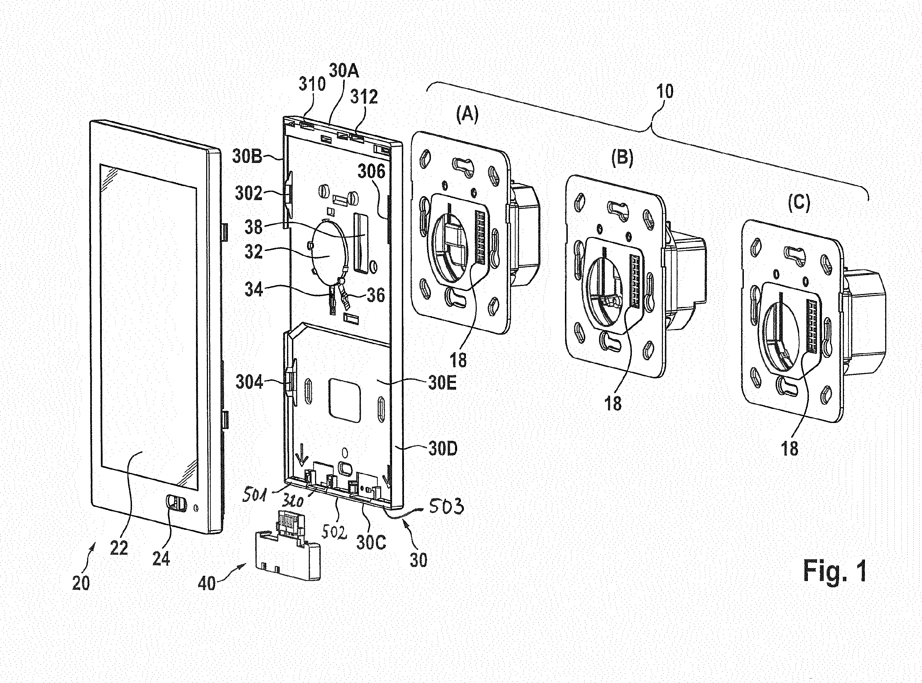

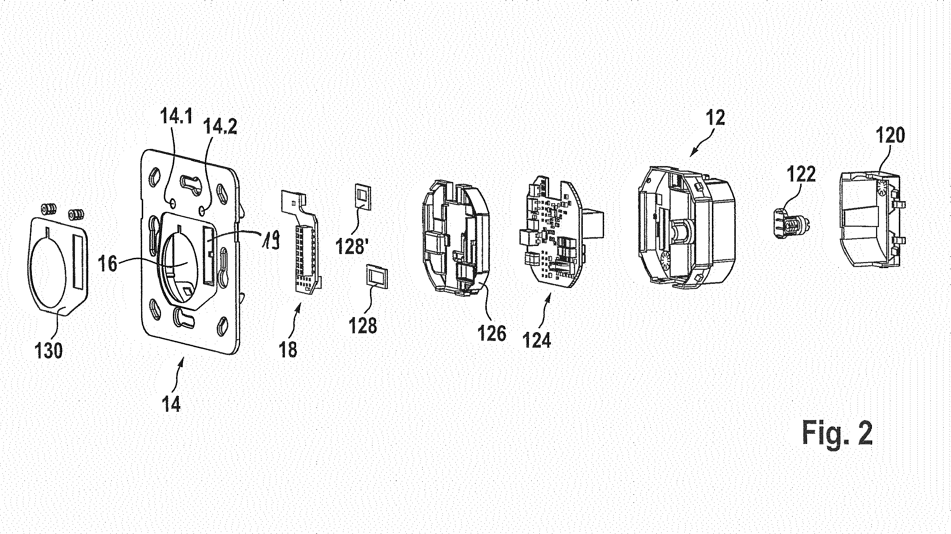

Figur 1 zeigt eine Explosionsdarstellung eines elektrischen oder elektronischen Installationsgerätes gemäß der vorliegenden Erfindung in einer bevorzugten Ausführungsform. Das Installationsgerät umfasst eine Energieversorgungseinheit 10, die ein Power-over-Ethernet-Netzteil (A), ein Weitbereichsnetzteil (B) mit 10-35 V AC/DC, vorzugsweise 24 V, oder ein 230 V-Netzteil (C) sein kann. Einzelheiten des Aufbaus der Energieversorgungseinheit 10 sind im Zusammenhang mit der Figur 2 beschrieben.

Das Installationsgerät weist weiterhin einen Bedienaufsatz 20 auf, der eine Eingabeeinrichtung für die Eingabe von Befehlen für die Steuerung der Raumqualität und zumindest eine Ausgabeeinrichtung aufweist, wobei die Eingabeeinrichtung als Touchscreen 22 ausgebildet ist, der gleichermaßen eine optische Ausgabeeinrichtung in Form eines Displays bildet. Der Bedienaufsatz 20 ist mit der Energieversorgungseinheit 10 zumindest elektrisch gekoppelt und enthält weiterhin beispielsweise Helligkeits- und Näherungssensoren 24.

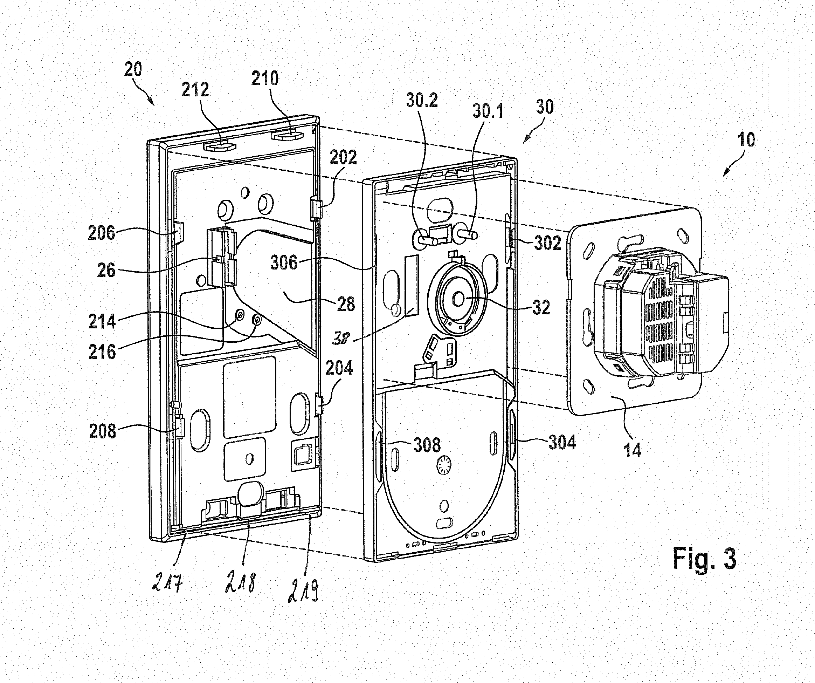

Baulich zwischen der Energieversorgungseinheit 10 und dem Bedienaufsatz 20 ist ein Aufnahmerahmen 30 vorgesehen, der einerseits den Tapetenausgleich besorgt, andererseits den Bedienaufsatz 20 ankoppelt. Der Aufnahmerahmen 30 ist im Grundriss im Wesentlichen rechteckig mit vier Kantenbereichen 30A, 30B, 30C, 30D, die eine Aufnahmerahmenplatte 30E einfassen. In den Aufnahmerahmen 30 sind weitere Funktionen integriert, und insbesondere ist ein in der Aufnahmerahmenplatte 30E angeordneter Lautsprecher 32 vorhanden, der über Lautsprecherkontakte 34, 36 elektrisch an den Bedienaufsatz 20 gekoppelt ist, wie es später deutlicher aus der Figur 3 hervorgeht. Der Aufnahmerahmen 30 weist entlang der Kante 30C Scharnierelemente 501, 502, 503 und an den Kanten 30B, 30D Verriegelungselemente 302, 304, 306 (ein weiteres, das dem Verriegelungselement 304 gegenübersteht, ist in der Figur 1 nicht erkennbar) auf, die bei korrekter Positionierung entsprechende Verriegelungselemente des Bedienaufsatzes 20 (in Figur 3 gezeigt) aufnehmen. Außerdem sind Verriegelungselemente 310, 312 an einem die parallelen Kantenbereiche 30B, 30D verbindenden Kantenbereich 30A, der bei der gezeigten Baulage des Installationsgerätes die Oberkante des Aufnahmerahmens 30 bildet, vorgesehen. Nahe dem Lautsprecher 32 ist eine Zugangsöffnung 38 vorgesehen, die in der Montageposition einer Buchse 18 der Energieversorgungseinheit 10, z.B. (A), gegenüberliegt, so dass durch die Zugangsöffnung 38 hindurch die Kontaktierung mit dem Bedienaufsatz 20 erfolgen kann. In den Kantenbereich 30C, der bei der gezeigten Baulage die Unterkante des Aufnahmerahmens 30 bildet, ist eine Anschlussöffnung 320 eingelassen, die einen Temperatursensor 40 zumindest teilweise aufnehmen und positionieren kann. Wird ein Temperatursensor 40 nicht verwendet, kann die Anschlussöffnung 320 mit einem Blindstopfen verschlossen werden.

Figur 2 zeigt eine Explosionsansicht einer Energieversorgungseinheit 10 für ein elektrisches oder elektronisches Installationsgerät gemäß der vorliegenden Erfindung. Die Energieversorgungseinheit 10 ist so dimensioniert, dass sie in ein übliches Unterputzgehäuse 12, das einen Referenzrahmen 14 aufweist, der zur Anlage an eine Wand gedacht ist, eingesetzt werden kann. Der Referenzrahmen 14 hat beispielsweise eine Dicke von 1.8 mm und steht etwa um diesen Betrag von einer üblich verputzten Wand hervor. Der Referenzrahmen 14 weist eine mittig gelegene Öffnung 16 für den Lautsprecher und eine Öffnung 19 für den elektrischen Kontakt auf. Um zumindest einen elektrischen Kontakt zur Verfügung zu stellen, ist an der Energieversorgungseinheit 10 eine Kontaktbuchse 18 vorgesehen, für ein Power-over-Ethernet-Netzteil beispielsweise eine 16-polige Buchse, die neben dem Anschluss elektrischer Kontakte auch dem Anschluss von Datenleitungen dient. Der Referenzrahmen 14 weist weiterhin zwei voneinander beabstandete Öffnungen 14.1 und 14.2 auf, die, wie es noch erläutert wird, dazu dienen, einen Tapetenausgleich zu realisieren. Das Unterputzgehäuse 12 ist mit einer Klappe 120 abgeschlossen, wobei auch eine Zugentlastung 122 für eine Stromzuleitung vorgesehen sein kann. In das Unterputzgehäuse 12 ist eine Netzteilleiterplatte 124 eingesetzt, wobei eine Zwischenplatte 126 für einen Distanzausgleich sorgt. Übliche Steckerdichtungen 128, 128' besorgen die Abschirmung gegenüber der Kontaktbuchse 18. An den Referenzrahmen 14 ist eine Lautsprecherdichtung 130 gelegt, die im Zusammenwirken mit einem abgedichteten Teil des Unterputzgehäuses 12 ein Rückraumvolumen zur Akustikverbesserung definiert.

Figur 3 ist eine Explosionsdarstellung des elektrischen oder elektronischen Installationsgerätes der Figur 1 von der Rückseite oder Wandseite her gesehen. Hier ist insbesondere zu erkennen, dass der Aufnahmerahmen 30 mit zwei beabstandeten Schrauben 30.1, 30.2 versehen ist, die so angeordnet sind, dass sie bei bestimmungsgemäßer Montage in die Öffnungen 14.1, 14.2 (Figur 1) des Referenzrahmens 14 greifen. Die Schrauben 30.1, 30.2 haben eine bestimmte Länge mit der sie von der Rückseite des Aufnahmerahmens 30 ragen. Vorgegeben durch diese Länge der Schrauben 30.1, 30.2 bestimmt sich der mögliche Tapeten- oder Toleranzausgleich gegenüber dem Referenzrahmen 14. Sobald die relative Positionierung von Energieversorgungseinheit 10 und Aufnahmerahmen 30 festgelegt ist, kann diese mit Hilfe einer weiteren Verschraubung fixiert werden. Dann liegt die Öffnung 38 genau über der Buchse 18 (Figur 1), so dass ein entsprechender Stecker 26, der an dem Bedienaufsatz 20 rückseitig angebracht ist, beim Aufbringen des Bedienaufsatzes 20 in die Buchse 18 greifen kann. Um den Bedienaufsatz 20 präzise in Bezug auf den Aufnahmerahmen 30 zu positionieren, weist der Bedienaufsatz an zwei gegenüberliegenden Seiten Verriegelungselemente 202, 204 und 206, 208 auf, die mit entsprechenden Verriegelungselementen 302, 304 und 306, 308 korrespondieren, auf, zusätzlich zwei weitere Verriegelungselemente 210, 212 an einer die beiden Seiten verbindenden Seite, denen ebenfalls entsprechende Verriegelungselemente am Aufnahmerahmen 30 gegenüber stehen. Zur Montage werden dann zunächst die Verriegelungselemente 217, 218, 219 mit den Verriegelungselementen 501, 502, 503 in Eingriff gebracht, so dass der Bedienaufsatz 20 nach Art einer Scharnierverbindung an Aufnahmerahmen 30 festgelegt ist. Sodann wird die Bedienaufnahme verschwenkt, bis die Verriegelungselemente 202, 204, 206, 208 und 210, 212 in die korrespondierenden Verriegelungselemente des Aufnahmerahmens eingerastet sind. In dieser eingerasteten Position sind die Kontakte 34, 36 des Lautsprechers 30 (Figur 1) im elektrischen Kontakt mit entsprechenden Kontakten 214, 216 auf der Rückseite des Bedienaufsatzes 20. Gleichzeitig wird zwischen dem Lausprecher 32 und der Rückseite des Bedienaufsatzes 20 ein Schallkanal 28 gebildet, der in einen seitlichen Ausgang mündet, der zwischen dem Aufsatz und dem Aufnahmerahmen 30 gebildet ist. Gleichzeitig nutzt der Lautsprecher 32 zur Akustikverbesserung als Rückraumvolumen einen abgedichteten Teil des Unterputzgehäuses 12, der nicht von der Energieversorgungselektrik belegt ist.

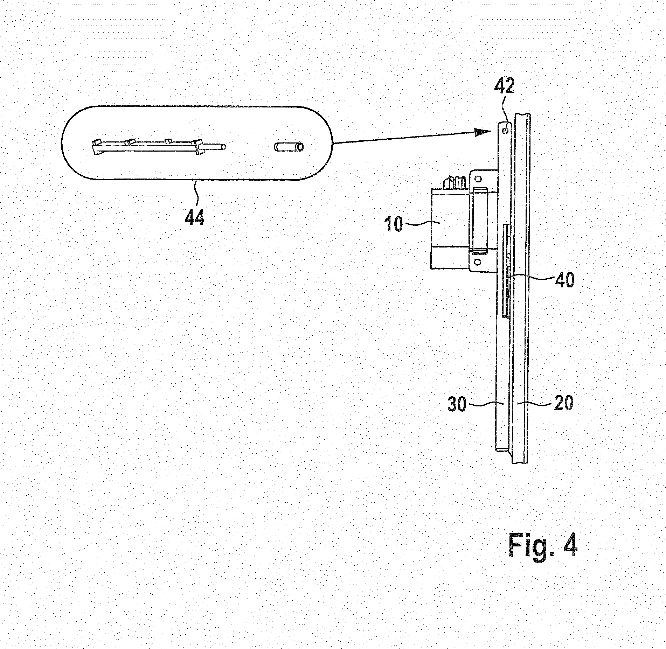

Figur 4 zeigt das elektrische oder elektronische Installationsgerät gemäß der vorliegenden Erfindung von der Seite, wobei die Schallkanalöffnung 40 zu erkennen ist, die zwischen dem Bedienaufsatz 20 und dem Aufnahmerahmen 30 gebildet ist. Der Aufnahmerahmen 30 weist weiterhin eine Entriegelungsöffnung 42 auf, hinter der sich ein Demontageschutz 44, beispielhaft als federbelastetes Riegelelement ausgeführt, verbirgt, der nur mittels eines Werkzeuges geöffnet werden kann, so dass einem versehentlichen Abnehmen des Bedienaufsatzes 20 vorgebeugt wird.

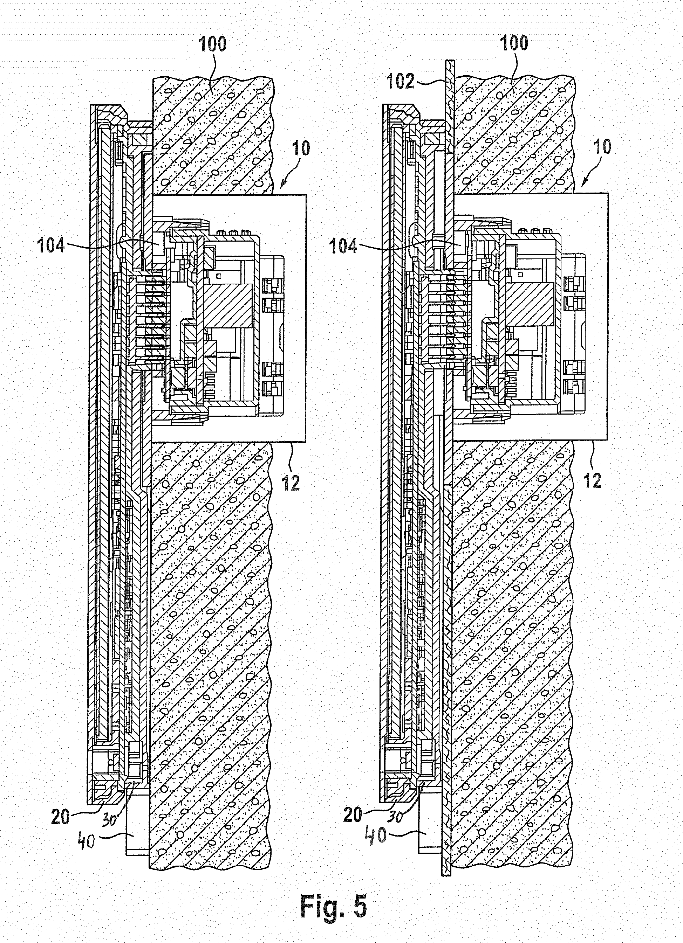

Figur 5 zeigt das elektrische oder elektronische Installationsgerät gemäß der vorliegenden Erfindung in zwei Einbausituationen, nämlich im montierten Zustand auf einer Wand 100 ohne Tapete (im linken Teilbild) und in montiertem Zustand auf einer Wand 100 mit einer Tapete 102, die bis zu 2 mm Dicke aufweisen kann. In beiden Bausituationen befindet sich die Energieversorgungseinheit 10 innerhalb eines Unterputzgehäuses 12, die auf übliche Weise in die Wand 100 eingelassen ist. Vor der Wand 100 bzw. vor der Tapete 102 sitzen der Aufnahmerahmen 30 und der Bedienaufsatz 20, wobei hier zu erkennen ist, dass der Aufnahmerahmen 30 mit Hilfe von Schrauben z.B. 104 an dem Referenzrahmen 14 gesichert ist. Der Ausgleich selbst erfolgt dann über einen speziellen Steckverbinder, der die Dicken- bzw. Tiefendifferenzen ausgleicht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Elektrisches oder elektronisches Installationsgerät, mit
- einer Energieversorgungseinheit (10);
- einem Referenzrahmen (14), der die Einbauposition des Installationsgerätes festlegt;
- einem Bedienaufsatz (20), der mit der Energieversorgungseinheit (10) zumindest elektrisch gekoppelt ist, wobei der Bedienaufsatz (20) eine Eingabeeinrichtung (22) für die Eingabe von Befehlen für die Steuerung der Raumqualität und zumindest eine Ausgabeeinrichtung (22) aufweist;
**gekennzeichnet durch**
einen Aufnahmerahmen (30), der in Bezug auf den Referenzrahmen (14) verlagerbar ist, um Dicken- oder Höhentoleranzen der Einbauposition auszugleichen, wobei der Bedienaufsatz (20) am Aufnahmerahmen (30) festgelegt ist und wobei die elektrische Kopplung des Bedienaufsatzes (20) zur Energieversorgungseinheit (10) unabhängig von der Position des Aufnahmerahmens (30) gewährleistet ist.

2. Elektrisches oder elektronisches Installationsgerät nach Anspruch 1, **dadurch gekennzeichnet, dass** der Referenzrahmen (14) Bestandteil eines Unterputzgehäuses (12) ist, in der die Energieversorgungseinheit (10) untergebracht ist.

3. Elektrisches oder elektronisches Installationsgerät nach Anspruch 1, **dadurch gekennzeichnet, dass** die Energieversorgungseinheit (10) ein Power-over-Ethernet-Netzteil, ein Weitbereichsnetzteil mit 10 - 35 V AC/DC, vorzugsweise 24 V, oder ein 230 V - Netzteil ist.

4. Elektrisches oder elektronisches Installationsgerät nach Anspruch 1, **dadurch gekennzeichnet, dass** im oder am Aufnahmerahmen (30) Führungsmittel (30.1, 30.2) vorgesehen sind, die verlagerbar mit komplementären Führungsmitteln (14.1, 14.2) im oder am Referenzrahmen (14) im Eingriff sind.

5. Elektrisches oder elektronisches Installationsgerät nach Anspruch 4, **dadurch gekennzeichnet, dass** die Führungsmittel (30.1, 30.2) des Aufnahmerahmens (30) Schrauben sind und der Referenzrahmen (14) entsprechende Gewindeöffnungen als komplementäre Führungsmittel (14.1, 14.2) aufweist.

6. Elektrisches oder elektronisches Installationsgerät nach Anspruch 1, **dadurch gekennzeichnet, dass** der Aufnahmerahmen (30) einen Lautsprecher (32) aufweist.

7. Elektrisches oder elektronisches Installationsgerät nach Anspruch 6, **dadurch gekennzeichnet, dass** der Lautsprecher (32) zur Akustikverbesserung als Rückraumvolumen einen abgedichteten Teil des Unterputzgehäuses (12) nutzt.

8. Elektrisches oder elektronisches Installationsgerät nach Anspruch 6, **dadurch gekennzeichnet, dass** die einander zugewandten Seiten von Bedienaufsatz (20) und Aufnahmerahmen (30) so gestaltet sind, dass ein Schallkanal für von dem Lautsprecher (32) erzeugte Schallwellen zu deren zielgerichteter Ausgabe aus dem Installationsgerät gebildet wird.

9. Elektrisches oder elektronisches Installationsgerät nach Anspruch 1, **dadurch gekennzeichnet, dass** der Aufnahmerahmen (30) Rastelemente zum Festlegen des Bedienaufsatzes (20) aufweist.

10. Elektrisches oder elektronisches Installationsgerät nach Anspruch 1, **dadurch gekennzeichnet, dass** der Aufnahmerahmen (30) einen Demontageschutz aufweist.

11. Elektrisches oder elektronisches Installationsgerät nach Anspruch 1, **dadurch gekennzeichnet, dass** am Bedienaufsatz (20) ein Pfostenstecker bereitgestellt ist, der eine entsprechende Buchse (18) der Energieversorgungseinrichtung (10) kontaktiert, um wenigstens die elektrische Kopplung von Bedienaufsatz (20) und Energieversorgungseinheit (10) herzustellen.

12. Elektrisches oder elektronisches Installationsgerät nach Anspruch 1, **dadurch gekennzeichnet, dass** ein Temperatursensor (40) an den Bedienaufsatz (20) und/oder den Aufnahmerahmen (30) gekoppelt ist, wobei der Temperatursensor (40) die Temperatur außerhalb des Installationsgerätes erfasst.
